# EUROPÄISCHE PATENTSCHRIFT

(11) **EP 1 216 183 B1**
(45) Veröffentlichungstag und Bekanntmachung des Hinweises auf die Patenterteilung: **23.07.2003**
(21) Anmeldenummer: 00964218.2
(22) Anmeldetag: 21.09.2000
(51) Int. Cl.: B62D 29/04, B61D 17/00

(54) **PROFILVERSTÄRKTES BAUELEMENT**
STRUCTURAL ELEMENT WHICH IS REINFORCED WITH A PROFILED SECTION
COMPOSANT RENFORCE PAR DES PROFILES

(30) Priorität: 23.09.1999 DE 19945557
(43) Veröffentlichungstag der Anmeldung: 26.06.2002
(73) Patentinhaber: Bombardier Transportation GmbH, 13627 Berlin (DE)
(72) Erfinder: KRUSCHWITZ, Thomas, 10245 Berlin (DE); PROCKAT, Jan, 12559 Berlin (DE)
(74) Vertreter: Akers, Noel James
(86) Internationale Anmeldenummer: EP0009239
(87) Internationale Veröffentlichungsnummer: WO01021467

(56) Entgegenhaltungen:
- WO-A-96/37380
- DE-A- 3 732 086
- DE-A- 19 639 339
- DE-U- 29 709 847
- GB-A- 2 211 780
- US-A- 5 934 849

## Beschreibung

### Technisches Gebiet

Die vorliegende Erfindung betrifft ein profilverstärktes Bauelement mit zumindest einem Verstärkungsprofil, das weitgehend vollständig in dem Bauelement eingebettet ist.

### Stand der Technik

Derartige profilverstärkte Bauelemente werden beispielsweise für die Ausbildung von Wagenkastenkonstruktionen von Schienenfahrzeugen im Bereich von Seiten-, Zwischenwänden, Decken und Böden als plattenförmige Elemente verwendet. Im einzelnen ist hierbei für eine möglichst hohe Festigkeit, Steifigkeit und gleichzeitig für ein geringes gewicht der Bauelemente zu sorgen. Dies wird dadurch gewährleistet, daß die aus Gründen einer Gewichtsreduzierung verwendeten leichten Werkstoffe für die Bauelemente, beispielsweise Faserverbundwerkstoffe, durch in das Bauelement integrierte Verstärkungsprofile verstärkt werden.

Eine Befestigung der plattenförmigen Bauelemente in der Wagenkastenkonstruktion erfolgt üblicherweise durch auf die Bauelemente aufgeklebte Befestigungsprofile, über die die Bauelemente an Pfosten und/oder Streben einer Tragkonstruktion des Wagenkastens oder an angrenzenden Bauelementen festgelegt sind. Bei dieser Anbringung der Bauelemente über aufgeklebte Befestigungsprofile entstehen jedoch Probleme hinsichtlich der Belastbarkeit der Klebeverbindung zwischen dem Bauelement und dem Befestigungsprofil. So hält die Klebeverbindung oftmals einer hohen Schubbelastung nicht stand, da das Befestigungsprofil lediglich auf der Deckfläche des Bauelementes aufgeklebt ist und dadurch nicht ausreichend fest an dem Bauelement angebracht werden kann.

Zur Verbesserung der Verbindung zwischen Bauelement und Befestigungsprofil ist es bekannt, Befestigungsprofile in die Bauelemente einzuschrauben oder einzunieten und somit in dem Bauelement zu verankern. Bei derartigen eingeschraubten Befestigungsprofilen werden in der Tragkonstruktion des Wagenkastens auftretende Kräfte oder Spannungen über die Befestigungsprofile in die Bauelemente übertragen. Für die Befestigung der Profile sind daher Anforderungen an eine gleichmäßige Krafteinleitung in die Bauelemente zu beachten, insbesondere ist zu gewährleisten, daß sich die auftretenden Kräfte gut in dem Bauelement verteilen und weitergeleitet werden, so daß Spannungen und Verzerrungen in dem Bauelement vermieden werden. Jedoch entstehen bereits beim Einschrauben oder Einnieten der Befestigungsprofile in dem Bauelement Spannungen, so daß eine gleichmäßige Krafteinleitung über die Befestigungsprofile in das Bauelement nicht immer sichergestellt ist.

Die DE 196 39 339 A1 beschreibt ein profilverstärktes Bauelement nach dem Oberbegriff des Anspruchs 1, mit einem langgestreckten Verstärkungsprofil, das vollständig in dem Bauelement eingebettet ist. Das Verstärkungsprofil deckt ein Kopfprofil ab, das in einer Ausnehmung des Bauelements sitzt. Das Kopfprofil weist zwei seitliche Schenkel auf, die sich parallel zu dem langgestreckten Verstärkungsprofil erstrecken.

### Darstellung der Erfindung

Der Erfindung liegt die Aufgabe zugrunde, ein profilverstärktes Bauelement zu schaffen, das einfach und sicher montiert sowie mit möglichst geringem Aufwand so gestaltet werden kann, daß es hinsichtlich einer gleichmäßigen Einleitung und Verteilung von auftretenden Kräften den Anforderungen genügt.

Die Lösung dieser Aufgabe erfolgt durch das im Anspruch 1 beschriebene Bauelement.

Demzufolge ist das erfindungsgemäße Bauelement mit wenigstens einem weitgehend vollständig eingebetteten, langgestreckten Verstärkungsprofil versehen. Hierbei verlaufen entlang der Längserstreckung des Verstärkungsprofils wenigstens abschnittsweise Ausnehmungen in dem Bauelement, in denen ein Befestigungsprofil aufgenommen und eingeklebt ist. Somit greift das Befestigungsprofil in die Ausnehmungen des Bauelementes ein und ist mittels einer Klebeverbindung an dem Bauelement befestigt. Dadurch wird eine zuverlässige Verankerung des Befestigungsprofils in dem Bauelement gewährleistet.

Das Bauelement kann über das darin verankerte Befestigungsprofil auf sichere Art und Weise beispielsweise an einer Tragkonstruktion, wie z.B. Pfosten und Streben, einer Wagenkastenkonstruktion eines Schienenfahrzeugs angebracht werden. Hierbei nimmt das Befestigungsprofil zum einen die in der Tragkonstruktion auftretenden Kräfte auf. Zum anderen ist durch den Eingriff des Befestigungsprofils in die entlang der Längserstreckung des Verstärkungsprofils verlaufenden Ausnehmungen gewährleistet, daß das Befestigungsprofil die Kräfte gleichmäßig in das Verstärkungsprofil weiterleitet. Somit wirkt das erfindungsgemäß Befestigungsprofil als ein Krafteinleitungsadapter für eine im wesentlichen spannungsoptimierte Übertragung von Kräften aus z.B. der Tragkonstruktion in das Verstärkungsprofil. Dies bietet den großen Vorteil, daß die eingeleiteten Kräfte und Spannungen über das Verstärkungsprofil gut weitergeleitet werden und sich gleichmäßig in dem Bauteil ausbreiten und verteilen können. Somit werden Spannungen oder ein Verziehen des Bauelements durch die erfindungsgemäße Anordnung des als Krafteinleitungsadapter ausgebildeten Befestigungsprofils effektiv vermieden. Das Verstärkungsprofil, das aus Gründen der Festigkeit in dem Bauelement integriert ist, dient hierbei nicht nur der Aussteifung, sondern auch der Kraftaufnahme- und Weiterleitung in das Bauelement.

Für die Anbindung von Krafteinleitungspunkten an dem Bauelement ist der Krafleinleitungsadapter sowohl an dem Verstärkungsprofil als auch an einer Oberfläche des Bauelements angeklebt. Hierdurch ergibt sich eine optimierte Klebgeometrie zwischen dem Adapter und dem Bauelement, die es ermöglicht, daß die auftretenden Kräfte in das Verstärkungselement und zusätzlich über die Oberfläche des Bauelements in das Bauelement eingebracht werden können. Somit werden die Kräfte sehr gleichmäßig über das Bauelement verteilt.

Bevorzugte Weiterbildungen der Erfindung sind in den weiteren Ansprüchen beschrieben.

Für den Einsatz des profilverstärkten Bauelements im Bereich von Seiten-, Zwischenwänden, Decken und Böden zur Ausbildung einer Wagenkastenkonstruktion eines Schienenfahrzeugs wird bevorzugt, daß das Bauelement im wesentlichen plattenförmig gestaltet ist. Hierbei ist eine Dicke des plattenförmigen Bauelements vorzugsweise derart bemessen, daß die Anforderungen an die Stabilität des Bauelements erfüllt sind.

Für die Übertragung von Kräften auf das Verstärkungsprofil bietet es Vorteile, wenn an beiden Seiten der Begrenzung des Verstärkungsprofils in dem Bauelement jeweils eine Ausnehmung vorgesehen ist. Hierbei können die Ausnehmungen in das Bauelement angrenzend an das Verstärkungsprofil eingeschlitzt oder eingekerbt sein, so daß Nuten oder Schlitze in dem Bauelement ausgebildet sind. Hierdurch ist gewährleistet, daß das Befestigungsprofil bzw. der Krafteinleitungsadapter, der in die Schlitze eingreift, unmittelbar an dem Verstärkungsprofil anliegt und so die Kräfte direkt in das Verstärkungsprofil einleiten kann.

Für die Anbringung des Befestigungsprofils hat es sich als vorteilhaft erwiesen, daß das Befestigungsprofil das Verstärkungsprofil zumindest abschnittsweise umschließt. Hierdurch wird sichergestellt, daß die Klebeverbindung zwischen dem Befestigungsprofil und dem Bauelement auch einer Schubbelastung in der Hauptbelastungsrichtung entlang der Oberfläche des Bauelements standhält, da die Schubkräfte von dem Verstärkungselement aufgenommen werden.

Um das Gewicht des Bauelements möglichst gering zu halten, wird es bevorzugt, dieses aus zumindest einem Faserverbundwerkstoff, insbesondere einem faserverstärkten Kunststoff herzustellen. Neben einer verhältnismäßig hohen Festigkeit weist dieser Werkstoff auch Elastizität auf, so daß die auftretenden Kräfte gut aufgenommen und verteilt werden können.

Bevorzugt weist das Bauelement eine sandwichartige Struktur auf. Hierbei sind verschiedene Werkstoffarten, beispielsweise mehrere Faserverbundwerkstoffe mit unterschiedlichen Festigkeiten, miteinander kombiniert und in dem Bauelement übereinandergeschichtet angeordnet. Hierdurch kann auf einfache Art und Weise ein Bauteil mit den gewünschten Eigenschaften hinsichtlich Stabilität, Gewicht, Festigkeit oder Tragfähigkeit ausgebildet werden.

Für die Gestaltung des Verstärkungsprofils hat sich als vorteilhaft erwiesen, dieses im wesentlichen rechteckförmig und/oder zur Erzielung einer Gewichtsreduzierung als Hohlkörper auszubilden. Die durch den rechteckförmigen Hohlkörper ausgebildeten Seitenflächen bieten vorteilhafterweise eine Anlagefläche zur Anbringung des Befestigungsprofils. Die Verbindung des Befestigungsprofils mit dem Verstärkungsprofil kann so auf einfache Weise durch eine Klebeverbindung auf der Anlagefläche verwirklicht werden. Für das Material des Verstärkungsprofils wird Metall, insbesondere Aluminium bevorzugt. Mittels Aluminium kann das Verstärkungsprofil auf einfache Weise und gleichzeitig stabil und mit geringem Gewicht ausgebildet werden. Alternativ kommen in entsprechenden Anwendungsfällen auch Kunststoffe in Betracht.

Für das Anbringen des Befestigungsprofils in den Ausnehmungen des Bauelements ist es von Vorteil, wenn an dem Befestigungsprofils Stege angebracht sind. Hierbei greifen die Stege jeweils in eine Ausnehmung ein und sind darin verankerbar. Die Stege liegen vorzugsweise an dem Verstärkungselement an, so daß die auftretenden Kräfte bei Schubbelastung in der Hauptbelastungsrichtung auf das Verstärkungselement direkt übertragen werden und sich hierdurch das erfindungsgemäße Prinzip besonders gut verwirklichen läßt.

In diesem Zusammenhang hat es sich als günstig erwiesen, wenn die Stege über eine Deckplatte miteinander verbunden sind, die an einer zu der Oberfläche des Bauelements gerichteten Seite des Verstärkungsprofils anliegt. Durch diese Gestaltung ist sichergestellt, daß das Befestigungsprofil das Verstärkungsprofil zumindest abschnittsweise umfaßt. Hierdurch wird ein vergleichsweise exakter Eingriff des Befestigungsprofils mit dem Verstärkungsprofil ermöglicht, so daß auch hohe Schubkräfte in der Hauptbelastungsrichtung des Befestigungsprofils gleichmäßig in das Bauelement übertragen werden können.

Die Einleitung von Kräften in das Befestigungsprofil erfolgt vorzugsweise über zumindest einen daran angeformten Ansatz. Der Ansatz vereinfacht die Befestigung des Bauelements, beispielsweise an der Tragkonstruktion des Wagenkastens, oder die Anbringung einzelner Bauelemente untereinander.

### Kurze Beschreibung der Zeichnungen

Nachfolgend wird die Erfindung anhand einer beispielhaft in den Zeichnungen dargestellten Ausführungsform näher erläutert. Es zeigen:
- Fig. 1: eine perspektivische Ansicht des erfindungsgemäßen Bauelements; und
- Fig. 2: eine Querschnittsansicht des Bauelements entlang der Linie II-II in Fig. 1.

### Ausführliche Beschreibung einer bevorzugten Ausführungsform der Erfindung

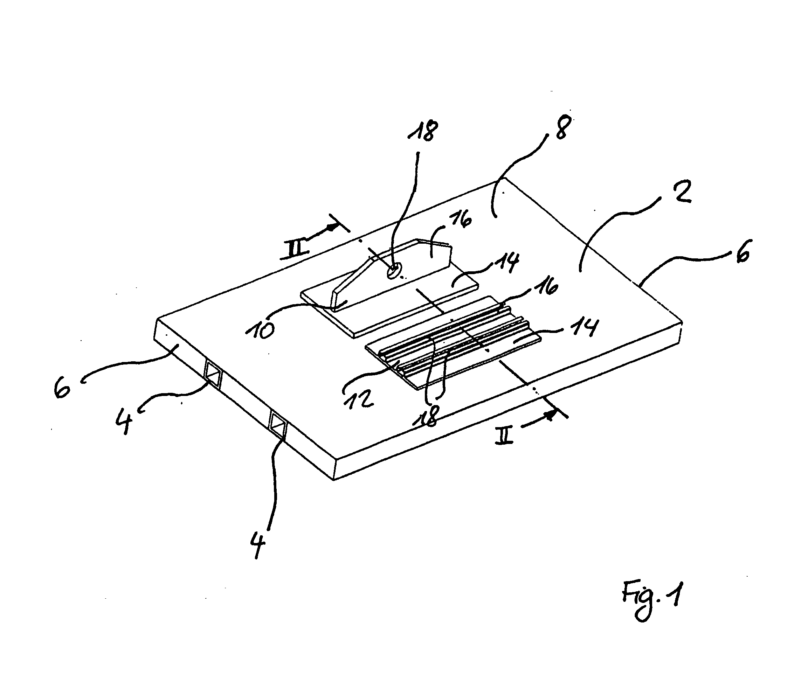

In Fig. 1 ist in einer perspektivischen Ansicht das erfindungsgemäße plattenförmige Bauelement 2 zu erkennen, in das als integrale Bauteile zwei Verstärkungsprofile 4 eingebettet sind. Die beiden Verstärkungsprofile 4 sind jeweils als langgestreckte, im Querschnitt rechteckförmige Hohlkörper ausgebildet. Hierbei sind die Verstärkungselemente 4 in einem vorbestimmten Abstand sowie parallel zueinander angeordnet und erstrecken sich zwischen den beiden Stirnflächen 6 des Bauelements 2 durch das Innere des Bauelements 2. An einer Oberfläche 8 des plattenförmigen Bauelements 2 sind zwei unterschiedlich gestaltete Befestigungsprofile 10, 12 als Krafteinleitungsadapter angeordnet. Die beiden Befestigungsprofile 10, 12 sind jeweils über einem der Verstärkungsprofile 4 an der Oberfläche 8 vorgesehen und entlang der jeweiligen Längserstreckung der Verstärkungsprofile 4 ausgerichtet. Hierbei weisen die Befestigungsprofile 10, 12 jeweils eine Deckplatte 14 auf, die an der Oberfläche 8 des Bauelementes 2 anliegt. Auf den Deckplatten 14 sind Ansätze 16 ausgebildet, über die Kräfte in das Bauelement 2 eingeleitet werden können. Das Befestigungsprofil 10 ist mit einem einzigen Ansatz 16 versehen, der eine Befestigungsöse 18 umfaßt. An der Deckplatte 14 des Befestigungsprofils 12 sind zwei Ansätze 16 als Führungschienen 18 ausgebildet. In diese Führungsschienen 18 können entsprechende Profile zur Krafteinleitung in das Bauelement 2 eingeklemmt werden. Dabei dienen die Führungsschienen 18 zur Befestigung des Bauelements 2 an einer nicht gezeigten Tragkonstruktion eines Wagenkasten eines Schienenfahrzeugs.

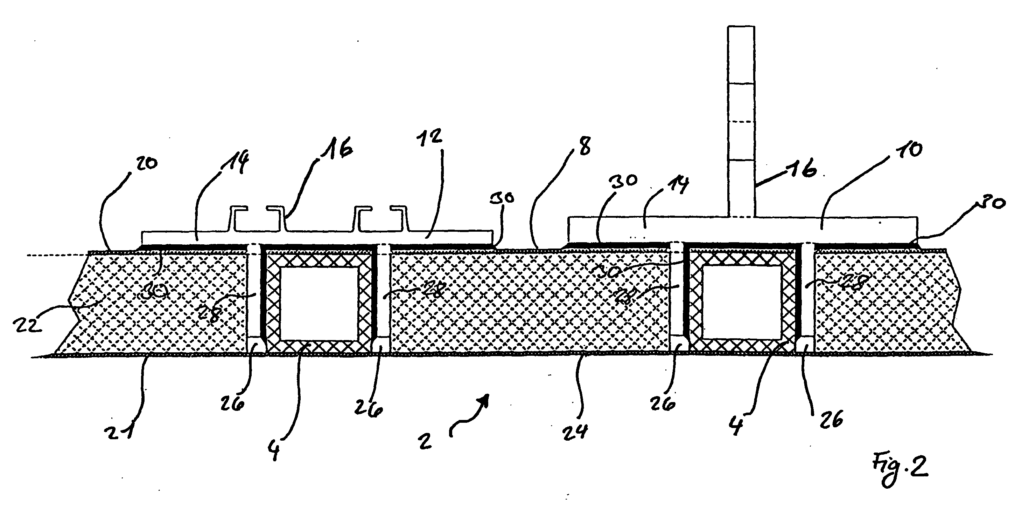

Wie anhand des in Fig. 2 dargestellten Querschnitts des sich senkrecht zur Zeichenebene erstreckenden plattenförmigen Bauelements 2 ersichtlich ist, weist dieses einen sandwichartigen Aufbau auf. Zwischen einer oberen und einer unteren Deckschicht 20, 21 ist eine Mittelschicht 22 eingeschoben, die wesentlich dicker als die beiden Deckschichten 20, 21 ist. Die Deckschichten 20, 21 sind aus faserverstärkten Kunststoffen mit hoher Festigkeit hergestellt. Hingegen ist die Mittelschicht 22 aus einem faserverstärkten Kunststoff mit geringem Gewicht gefertigt. Somit versteifen die Deckschichten 20, 21 die Mittelschicht 22 und verfestigen das gesamte Bauelement 2.

In dem Bauelement 2 sind die zwei hohlen, im wesentlichen quadratischen Verstärkungsprofile 4 integriert. An ihren zu der Oberfläche 8 und der Unterfläche 24 des Bauelements 2 weisenden (gemäß Fig. 2 oben und unten befindlichen) äußeren Querrändern liegen die Verstärkungsprofile 4 jeweils an der oberen 20 und der unteren Deckschicht 21 aus faserverstärktem Kunststoff an. Die äußeren Längsränder (gemäß Fig. 2 links und rechts befindlichen) der Verstärkungsprofile 4 sind jeweils gegen die Mittelschicht 22 aus faserverstärktem Kunststoff gerichtet. Auf diese Art und Weise sind die Verstärkungsprofile 4 in der Faserverbundstruktur des Bauelements 2 eingebettet.

Unmittelbar angrenzend an den Längsrändem der Verstärkungsprofile 4 sind Ausnehmungen 26 beidseitig der Verstärkungsprofile 4 in das Bauelement 2 durch die obere Deckschicht 20 und die Mittelschicht 22 eingeschlitzt. Somit ist an beiden Seiten der Begrenzung des Verstärkungsprofils 4 in dem Bauelement 2 jeweils eine Ausnehmung 26 angeordnet. Wie in Fig. 2 des weiteren zu erkennen, sind die Befestigungsprofile 10, 12 an der Oberfläche 8 des Bauelements 2 angeordnet und greifen jeweils mit zwei Stegen 28 in die Ausnehmungen 26 ein. Die zwei Stege 28 eines Befestigungsprofils 10, 12 sind parallel zueinander und rechtwinklig zu der Deckplatte 14 des Krafteinleitungsadapters angeordnet. Hierbei entspricht der Abstand zwischen zwei Stegen 28 im wesentlichen der Breite des Querrandes des Verstärkungsprofils 4, so daß das Befestigungsprofil beim Eingriff in die Ausnehmungen 26 das Verstärkungsprofil 4 im wesentlichen U-förmig umgreift. Zur Vergrößerung der Kontaktfläche zwischen dem Befestigungsprofil 10, 12 und dem Bauelement 2 erstreckt sich die Deckplatte 14 über einen weiten Bereich der Oberfläche 8 des Bauelements 2. Für die Verankerung des Befestigungsprofils 10, 12 in dem Bauelement 2 ist zwischen den Stegen 28, der Deckplatte 14 und dem Verstärkungsprofil 4 sowie zwischen den äußeren Abschnitten der Deckplatte 14 und der Oberfläche 8 des Bauelements 2 ein Klebstoff eingebracht, so daß eine feste Klebverbindung 30 zwischen dem Befestigungsprofil 10, 12 und dem Bauelement 2 vorgesehen ist. Hierdurch werden die Verstärkungsprofile 4 von den Befestigungsprofilen 10, 12 klebtechnisch nahezu vollständig umschlossen.

Über die Befestigungsprofile 10, 12 werden Kräfte, die beispielsweise aus der Befestigung des Bauelements 2 an der Tragkonstruktion des Wagenkastens resultieren, im wesentlichen in die Verstärkungsprofile 4-eingeleitet und in das Bauelement 2 weitergeleitet. Der dargestellte Eingriff der Stege 28 in das Bauelement 2 und die fast vollständige Umschließung der Verstärkungsprofile 4 durch die Befestigungsprofile 10, 12 gewährleisten, daß auch hohe Schubbelastungen in der Hauptbelastungsrichtung entlang der Oberflächen 8 aufgenommen werden können, ohne daß sich die Befestigungsprofile 10, 12 von dem Bauelement 2 lösen. Gleichzeitig können die die Ausnehmungen 26 des geschlitzten Bauelements 2 verschließenden Deckplatten 14 Schubbelastungen aufnehmen. Durch die Anordnung von Klebspalten zwischen den Verstärkungselementen 4, den Befestigungsprofilen 10, 12 und der Oberfläche 8 des Bauelements 2 ist eine optimierte Einleitung von mittleren bis hohen Kräften in das Bauelement 2 gewährleistet, welche den sicheren Verbleib der Befestigungsprofile 10,12 in dem Bauelement 2 auch beim Auftreten mittlerer und hoher Kräfte aufrechterhält.

## Patentansprüche

1. Profilverstärktes Bauelement mit zumindest einem langgestreckten Verstärkungsprofil, das weitgehend vollständig in dem Bauelement eingebettet ist, wobei entlang der Längserstreckung des Verstärkungsprofils (4) zumindest abschnittsweise Ausnehmungen (26) in dem Bauelement (2) verlaufen, und in den Ausnehmungen ein Befestigungsprofil (10, 12) eingeklebt ist, **dadurch gekennzeichnet, daß** das Befestigungsprofil (10, 12) an dem Verstärkungsprofil (4) und einer Oberfläche (8) des Bauelements (2) angeklebt ist.

2. Bauelement nach Anspruch 1,
**dadurch gekennzeichnet, daß** dieses im wesentlichen plattenförmig ist.

3. Bauelement nach Anspruch 1 oder 2,
**dadurch gekennzeichnet, daß** an beiden Seiten der Begrenzung des Verstärkungsprofils (4) jeweils eine Ausnehmung (26) in dem Bauelement (2) vorgesehen ist.

4. Bauelement nach zumindest einem der vorangehenden Ansprüche,
**dadurch gekennzeichnet, daß** das Befestigungsprofil (10, 12) das Verstärkungsprofil (4) zumindest abschnittsweise umschließt.

5. Bauelement nach zumindest einem der vorangehenden Ansprüche,
**dadurch gekennzeichnet, daß** dieses aus zumindest einem Faserverbundwerkstoff, insbesondere faserverstärktem Kunststoff besteht.

6. Bauelement nach Anspruch 5,
**dadurch gekennzeichnet, daß** dieses eine sandwichartige Struktur aufweist.

7. Bauelement nach zumindest einem der vorangehenden Ansprüche,
**dadurch gekennzeichnet, daß** das Verstärkungsprofil (4) im Querschnitt im wesentlichen rechteckförmig ist.

8. Bauelement nach zumindest einem der vorangehenden Ansprüche,
**dadurch gekennzeichnet, daß** das Befestigungsprofil (10, 12) Stege (28) umfaßt, die in die Ausnehmungen (26) eingreifen.

9. Bauelement nach Anspruch 8,
**dadurch gekennzeichnet, daß** die Stege (28) über eine Deckplatte (14) miteinander verbunden sind.

10. Bauelement nach zumindest einem der vorangehenden Ansprüche,
**dadurch gekennzeichnet, daß** das Befestigungsprofil (10, 12) zumindest einen daran angeformten Ansatz (16) aufweist.

11. Wagenkastenkonstruktion mit einem Bauelement (2) nach zumindest einem der vorangehenden Ansprüche.

## Claims

1. Structural element reinforced with a profiled section having at least one elongated profiled reinforcing section which is largely completely embedded in the structural element, recesses (26) running in the structural element (2) at least in some regions along the longitudinal extent of the profiled reinforcing section (4), and a profiled fastening section (10, 12) being bonded in the recesses, **characterized in that** the profiled fastening section (10, 12) is bonded to the profiled reinforcing section (4) and to an upper surface (8) of the structural element (2).

2. Structural element according to Claim 1, **characterized in that** the latter is essentially panel-shaped.

3. Structural element according to Claim 1 or 2, **characterized in that** a respective recess (26) is provided in the structural element (2) on both sides of the boundary of the profiled reinforcing section (4).

4. Structural element according to at least one of the preceding claims, **characterized in that** the profiled fastening section (10, 12) surrounds the profiled reinforcing section (4) at least in some regions.

5. Structural element according to at least one of the preceding claims, **characterized in that** the latter consists of at least one fibre-reinforced material, in particular fibre-reinforced plastic.

6. Structural element according to Claim 5, **characterized in that** the latter has a sandwich-like structure.

7. Structural element according to at least one of the preceding claims, **characterized in that** the profiled reinforcing section (4) is essentially rectangular in cross section.

8. Structural element according to at least one of the preceding claims, **characterized in that** the profiled fastening section (10, 12) comprises webs (28) which engage in the recesses (26).

9. Structural element according to Claim 8, **characterized in that** the webs (28) are connected to one another via a covering panel (14).

10. Structural element according to at least one of the preceding claims, **characterized in that** the profiled fastening section (10, 12) has at least one projection (16) integrally formed on it.

11. Freight car body construction having a structural element (2) according to at least one of the preceding claims.

## Revendications

1. Composant renforcé par des profilés, comprenant au moins un profilé de renforcement longitudinal qui est pratiquement complètement noyé dans le composant, des évidements (26) s'étendant au moins par portion dans le composant (2) le long de l'étendue longitudinale du profilé de renforcement (4), et un profilé de fixation (10, 12) étant collé dans les évidements, **caractérisé en ce que** le profilé de fixation (10, 12) est collé au profilé de renforcement (4) et à une surface (8) du composant (2).

2. Composant selon la revendication 1,
**caractérisé en ce que** celui-ci est essentiellement en forme de plaque.

3. Composant selon la revendication 1 ou 2,
**caractérisé en ce qu'**un évidement (26) respectif est prévu dans le composant (2) des deux côtés de la limitation du profilé de renforcement (4).

4. Composant selon au moins l'une des revendications précédentes,
**caractérisé en ce que** le profilé de fixation (10, 12) entoure au moins par portions le profilé de renforcement (4).

5. Composant selon au moins l'une des revendications précédentes,
**caractérisé en ce que** celui-ci se compose d'au moins un matériau composite renforcé par des fibres, en particulier un plastique renforcé par des fibres.

6. Composant selon la revendication 5,
**caractérisé en ce que** celui-ci présente une structure de type en sandwich.

7. Composant selon au moins l'une des revendications précédentes,
**caractérisé en ce que** le profilé de renforcement (4) a une forme essentiellement rectangulaire en section transversale.

8. Composant selon au moins l'une des revendications précédentes,
**caractérisé en ce que** le profilé de fixation (10, 12) comprend des ailettes (28) qui viennent en prise dans les évidements (26).

9. Composant selon la revendication 8,
**caractérisé en ce que** les ailettes (28) sont connectées les unes aux autres par le biais d'une plaque de recouvrement (14).

10. Composant selon au moins l'une des revendications précédentes,
**caractérisé en ce que** le profilé de fixation (10, 12) présente au moins une projection (16) rapportée.

11. Construction de caisse de wagon comprenant un composant (2) selon au moins l'une des revendications précédentes.
